# EUROPÄISCHE PATENTSCHRIFT

(11) **EP 1 455 951 B1**
(45) Veröffentlichungstag und Bekanntmachung des Hinweises auf die Patenterteilung: **23.03.2005**
(21) Anmeldenummer: 02791694.9
(22) Anmeldetag: 21.11.2002
(51) Int. Cl.: B05D 3/12, B05D 3/04, C09D 4/06

(54) **VERFAHREN ZUR HERSTELLUNG VON BESCHICHTUNGEN**
METHOD FOR PRODUCING LAYERS
PROCEDE DE REALISATION DE REVETEMENTS

(30) Priorität: 21.12.2001 DE 10163681
(43) Veröffentlichungstag der Anmeldung: 15.09.2004
(73) Patentinhaber: Röhm GmbH & Co. KG, 64293 Darmstadt (DE)
(72) Erfinder: BELIK, Pavel, 63517 Rodenbach (DE); AUER, Heinz-Jochen, 64521 Gross-Gerau (DE); DESCH, Wolfram, 64287 Darmstadt (DE); RAAB, Dieter, 63517 Rodenbach (DE); KRALL, Stefan, 64747 Breuberg/Neustadt (DE); STREIT, Jürgen, 63755 Alzenau (DE); SCHOLL, Sybille, 63517 Rodenbach (DE)
(86) Internationale Anmeldenummer: PCT/EP2002/013056
(87) Internationale Veröffentlichungsnummer: WO 2003/053596

(56) Entgegenhaltungen:
- EP-A- 0 417 815
- DE-A- 19 826 412
- US-A- 4 405 404
- COWIE, J. M. G.: "Polymers: Chemistry and Physics of Modern Materials" 1991 , BLACKIE ACADEMIC & PROFESSIONAL XP002255787 Seite 249

## Beschreibung

Die Erfindung betrifft ein Verfahren zur Beschichtung einer Fläche, wobei man eine Beschichtungsmasse mit einer Viskosität < 100 Pa.s auf eine zu beschichtende Fläche aufträgt und aushärten lässt. Dabei bezieht sich die vorliegende Erfindung insbesondere auf das Aufbringen von Boden- und Wandbeschichtungen sowie von Versiegelungen.

Beim Auftragen von Beschichtungen tritt oftmals das Problem auf, dass die eingesetzten Beschichtungsmassen gesundheitsschädliche, flüchtige Substanzen enthalten, die ihr gefahrloses Auftragen ohne geeignete Schutzausrüstung verhindern. Beispielsweise geht die Verarbeitung von Reaktionsharzen auf Basis von Methylmethacrylat oder Styrol zu Fußbodenbeschichtungen normalerweise mit einer starken Geruchsbelästigung einher und häufig können die bestehenden MAK-Grenzwerte nicht eingehalten werden.

Eine effektive Entfernung der gesundheitsschädlichen, flüchtigen Substanzen durch stationäre, d. h. in dem Gebäude bereits isolierte, Überdruckbelüftungsvorrichtungen ist im allgemeinen nicht ohne weiteres möglich, da sie die lokalen Gegebenheiten für diesen Zweck oftmals nur unzureichend berücksichtigen. Ansätze, die Effizienz der Belüftung durch die Verwendung von sogenannten Luftleitungssystemen, die meist in Form von Schläuchen ausgebildet sind, die direkt mit den stationären Überdruckbelüftungsvorrichtungen verbunden werden, zu verbessern, sind aus technischer Sicht nicht zufriedenstellend, weil der Transport solcher Luftleitungssysteme aufwendig und ihr Auf- und Abbau äußerst kompliziert und zeitaufwendig ist.

Auch der Einsatz von Absaugvorrichtungen hat sich in der Praxis nicht durchgesetzt, weil die zu entfernenden leichtflüchtigen Substanzen in der Regel auch stark brennbar sind. Folglich müssten die einzusetzenden Absaugvorrichtungen explosionsgeschützt ausgelegt sein, der Einsatz derartiger Absaugvorrichtungen ist jedoch für diese Zwecke im allgemeinen zu aufwendig und zu kostenintensiv.

Aus der Praxis ist daher bekannt, geruchsverminderte Beschichtungsmassen, insbesondere geruchsverminderte Methacrylat-Systeme einzusetzen. So offenbart beispielsweise die japanische Offenlegungsschrift JP 95-46571 ein System, das ungesättigte Harze, Cyclopentadienyl(meth)acrylate, Vernetzungsmittel, wie beispielsweise organische Peroxide, und Beschleuniger, wie beispielsweise Metallsalze organischer Säuren, enthält.

Gezeigt wurde, dass ein System, das Cumolhydroperoxid und Cobaltoctoat als Härter und Beschleuniger umfasst, härtet.

Weitere Systeme, die ebenfalls Cumolhydroperoxid und Cobaltoctoat verwenden, werden von den japanischen Offenlegungsschriften JP 95-5661 und JP 94-199 427 beschrieben.

Diese Systeme lösen zwar das Problem der Geruchsbelästigung, aber eine Gesundheitsgefährdung beim Auftragen dieser Systeme bleibt durch die Verwendung des problematischen Startsystems aus Co-Verbindung und Cumolhydroperoxid bestehen.

Die Druckschrift DE 198 26 412 beschreibt kalthärtende (Meth)acrylat-Reaktionsharze für Beschichtungen, wobei u. a. durch eine Beschränkung der Anteile von Methyl(meth)acrylat und Ethyl(meth)acrylat auf < 5 Gew.-%, bezogen auf die Gesamtmasse, eine Geruchsverminderung und eine Verminderung der Gesundheitsgefährdung erzielt wird. Obwohl durch die Verwendung dieser Reaktionsharze schon Beschichtungen mit recht brauchbaren Eigenschaften erhalten werden können, werden von der Technik für viele Anwendungsgebiete Beschichtungen mit höheren Anteilen an Methyl(meth)acrylat und/oder Ethyl(meth)acrylat gefordert, um das Eigenschaftsspektrum der Beschichtungen gezielt nach den Wünschen des Anwenders Maßschneidern zu können.

In Anbetracht des Standes der Technik ist es daher Aufgabe der vorliegenden Erfindung ein Verfahren zur Beschichtung einer Fläche zur Verfügung zu stellen, welches die Gesundheitsgefährdung beim Auftragen der Beschichtungsmasse weiter minimiert. Dabei soll das Verfahren möglichst universell einsetzbar sein und möglichst keinen Beschränkungen bezüglich der einsetzbaren Beschichtungsmassen unterliegen, so dass das Eigenschaftsspektrum der Beschichtungen in Abhängigkeit von der jeweiligen Anwendung gezielt optimiert werden kann.

Gelöst werden diese sowie weitere nicht explizit genannte Aufgaben, die jedoch aus den hierin diskutierten Zusammenhängen ohne weiteres ableitbar oder erschließbar sind, durch ein Verfahren zur Herstellung einer geruchsverminderten Beschichtung mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt.

Dadurch, dass man ein Verfahren zur Beschichtung einer Fläche bereitstellt, bei welchem wobei man eine Beschichtungsmasse mit einer Viskosität < 100 Pa.s, gemessen bei 25°C, auf eine zu beschichtende Fläche aufträgt und aushärten lässt, wobei sich das Verfahren dadurch auszeichnet, dass man während dem Auftragen der Beschichtungsmasse mittels mindestens einer mobilen Überdruckbelüftungsvorrichtung einen Gasstrom über die zu beschichtende Fläche leitet, gelingt es auf nicht ohne weiteres vorhersehbare Weise die Gesundheitsgefährdung beim Auftragen dieser Systeme deutlich zu verringern, so dass unter Einhaltung der bestehenden MAK-Werte die Beschichtungsmassen auch in geschlossenen Räumen aufgebracht werden können. Zugleich lassen durch das erfindungsgemäße Verfahren eine Reihe weiterer Vorteile erzielen:
⇒ Das erfindungsgemäße Verfahren ist nicht auf die Verwendung von gesundheitlich unbedenklichen Substanzen beschränkt. Vielmehr kann die Beschichtungsmasse durch geeignete Auswahl der einzelnen Bestandteile nach Art und Menge unabhängig von ihren MAK-Werten optimiert werden, so dass Beschichtungen mit einem insgesamt hervorragenden Eigenschaftsspektrum hergestellt werden können;
⇒ die vollständige Aushärtung der Beschichtungsmasse wird durch das erfindungsgemäße Verfahren weiter beschleunigt, so dass beispielsweise (Meth)acrylat-Reaktionsharze nach 0,5 bis 5 Stunden, bevorzugt nach < 2 Stunden nicht mehr klebrig sind;
⇒ die Aushärtung der Beschichtungsmassen kann durch Verwendung von bestimmten Beschleunigern und Initiatoren noch weiter verbessert werden;
⇒ gute Haftung auf vielen Substraten, wie Kunststoffen, Estrichen, Beton; und
⇒ weitestgehende Geruchsarmut während und nach dem Auftragen.

Im Rahmen der vorliegenden Erfindung wird eine Fläche beschichtet, indem man eine Beschichtungsmasse auf eine zu beschichtende Fläche aufträgt und aushärten lässt. Der Begriff "Beschichten" ist dem Fachmann bekannt. Nach DIN 8580 (Juli 1985) versteht man unter Beschichten ein Fertigungsverfahren zum Aufbringen einer fest haftenden Schicht aus formlosem Stoff auf ein Werkstück oder eine Trägerbahn. Erfindungsgemäß erfolgt die Beschichtung durch Aufbringen einer flüssigen, breiigen oder pastenförmigen Beschichtungsmasse, d. h. sie umfasst u. a. Anstreichen, Streichen, Lackieren, Dispersions- od Schmelzbeschichten.

Die Beschichtungsmassen können grundsätzlich auf allen festen Untergründen aufgebracht werden, besonders geeignet sind Asphalt, Betonasphalt, Bitumenestrich, Beton, Estrich, Keramikfliesen, Metall, wie beispielsweise Stahl oder Aluminium, sowie Holz. Je nach Art des Untergrundes ist es vorteilhaft vor dem Aufbringen der Beschichtungsmasse eine Grundierung auf den Untergrund aufzutragen. Diese Grundierungen sind in der Fachwelt weithin bekannt und können im allgemeinen kommerziell erhalten werden.

Erfindungsgemäß weist die Beschichtungsmasse bei 25°C und Normaldruck (101325 Pa) eine dynamische Viskosität < 100 Pa.s, vorzugsweise im Bereich von 0,1 mPa.s bis 10 Pa.s auf.

Als Beschichtungsmassen kommen zahlreiche Materialien in Frage, insbesondere natürliche (Kautschuk) und synthetische Polymere (Kunststoffe), die in Form von Schmelzen, organischen Lösungen, Organosolen, Plastisolen oder wässrigen Dispersionen, Anstrichstoffen (z.B. Lacke, Klebstoffe) aufgebracht werden. Dennoch hat es sich im Rahmen der vorliegenden Erfindung als besonders zweckmäßig erwiesen, Beschichtungsmassen einzusetzen, die sogenannte Reaktionsharze aufweisend
A) 1 Gewichtsteil mindestens einer ethylenisch ungesättigten Verbindung,
B) 0 - 2 Gewichtsteile eines in A) löslichen oder quellbaren (Pre)polymers,
C) 0 bis 0,15 Gewichtsteilen mindestens eines Paraffins und/oder Wachses,
D) ein bis zur Polymerisation von den polymerisierbaren Bestandteilen des Systems wenigstens in Bezug auf eine Komponente des Redoxsystems getrennt zu haltendes Redoxsystem enthaltend einen Beschleuniger und einen peroxidischen Katalysator oder Initiator in einer Menge ausreichend zur Kalthärtung der Komponente A) und
E) übliche Additive,
enthalten.

### Die Komponente A

Die ethylenisch ungesättigte Verbindung A) umfasst alle die organischen Verbindungen, die mindestens eine ethylenisch Doppelbindung aufweisen. Hierzu gehören unter anderem:
Nitrile der (Meth)acrylsäure und andere stickstoffhaltige Methacrylate, wie Methacryloylamidoacetonitril, 2-Methacryloyloxyethylmethylcyanamid, Cyanomethylmethacrylat;
(Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, sec-Butyl(meth)acrylat, tert-Butyl(meth)acrylat, Pentyl(meth)acrylat, n-Hexyl(meth)acrylat, Heptyl(meth)acrylat, 2-Ethylhexyl(meth)acrylat, n-Octyl(meth)acrylat, Nonyl(meth)acrylat, iso-Octyl(meth)acrylat, iso-Nonyl(meth)acrylat, 2-tert.-Butylheptyl(meth)acrylat, 3-iso-Propylheptyl(meth)acrylat, n-Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat;
Cycloalkyl(meth)acrylate, wie Cyclopentyl(meth)acrylat, Cyclohexyl(meth)acrylat, 3-Vinyl-2-butyl-cyclohexyl(meth)acrylat, Bornyl(meth)acrylat, 3-Vinylcyclohexyl(rneth)acrylat,
3,3,5-Trimethylcyclohexyl(meth)acrylat, Cyclopenta-2,4-dienyl(meth)acrylat, Isobornyl(meth)acrylat und 1-Methylcyclohexyl(meth)acrylat;
(Meth)acrylate, die sich von ungesättigten Alkoholen ableiten, wie 2-Propinyl(meth)acrylat, Allyl(meth)acrylat und Oleyl(meth)acrylat, Vinyl(meth)acrylat;
Aryl(meth)acrylate, wie Benzyl(meth)acrylat, Nonylphenyl(meth)acrylat oder Phenyl(meth)acrylat, wobei die Arylreste jeweils unsubstituiert oder bis zu vierfach substituiert sein können;
Hydroxyalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat, 2,5-Dimethyl-1,6-hexandiol(meth)acrylat, 1,10-Decandiol(meth)acrylat, 1,2-Propandiol(meth)acrylat;
Polyoxyethylen- und Polyoxypropylen-Derivate der (Meth)acrylsäure, wie Triethylenglykol(meth)acrylat, Tetraethylenglykol(meth)acrylat, Tetrapropylenglykol(meth)acrylat;
Di(meth)acrylate, wie 1,2-Ethandioldi(meth)acrylat, 1,2-Propandioldi(meth)acrylat, 1,3-Butandiolmethacrylat, 1,4-Butandioldi(meth)acrylat, 2,5-Dimethyl-1,6-hexandioldi(meth)acrylat, 1,10-Decandioldi(meth)acrylat, Diethylenglykoldi(meth)acrylat, Dipropylenglykoldi(meth)acrylat, Triethylenglykoldi(meth)acrylat, Tripropylenglykoldi(meth)acrylat, Tetraethylenglykoldi(meth)acrylat, Tetrapropylenglykoldi(meth)acrylat, Polyethylenglykoldi(meth)acrylat (vorzugsweise mit einem Gewichtsmittel des Molekulargewichtes im Bereich von 200 - 5000000 g/mol, zweckmäßigerweise im Bereich von 200 bis 25000 g/mol, insbesondere im Bereich von 200 bis 1000 g/mol), Polypropylenglykoldi(meth)acrylat (vorzugsweise mit einem Gewichtsmittel des Molekulargewichtes im Bereich von 200 - 5000000 g/mol, zweckmäßigerweise im Bereich von 250 bis 4000 g/mol, insbesondere im Bereich von 250 bis 1000 g/mol), 2,2-Thiodiethanoldi(meth)acrylat (Thiodiglykoldi(meth)acrylat), 3,9-Di(meth)acryloyloxymethyltricyclo[5.2.1.0(2.6)]decan, insbesondere 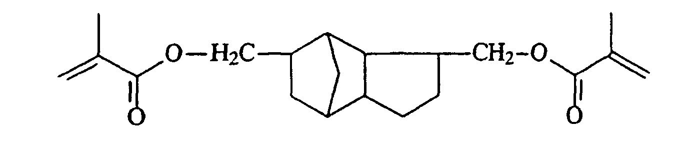 3,8-Di(meth)acryloyloxymethyltricyclo[5.2.1.0(2.6)]decan, 4,8-Di(meth)acryloyloxymethyltricyclo[5.2.1.0(2.6)]decan, 4,9-Di(meth)acryloyloxymethyltricyclo[5.2.1.0(2.6)]decan, ethoxyliertes Bisphenol A-Di(meth)acrylat, insbesondere 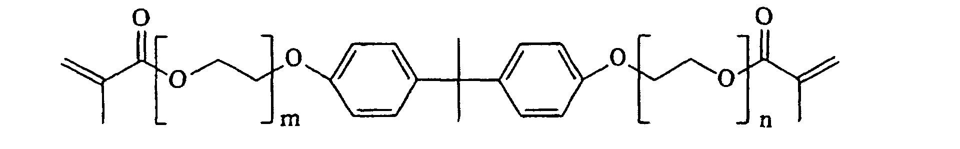 wobei m und n größer gleich null sind und die Summe m + n vorzugsweise im Bereich von 1 bis 3, insbesondere im Bereich von 1,5 bis 2,5 liegt; und durch Umsetzung von Diisocyanaten mit 2 Äquivalenten Hydroxyalkyl(meth)acrylat erhältliche Di(meth)acrylate, insbesondere 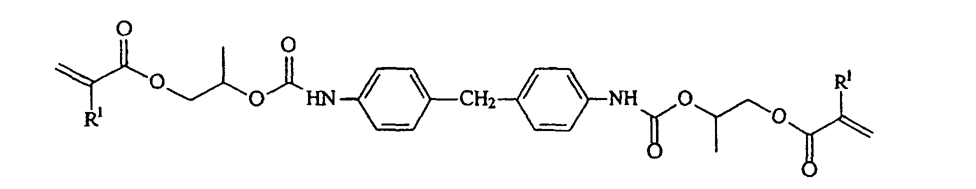 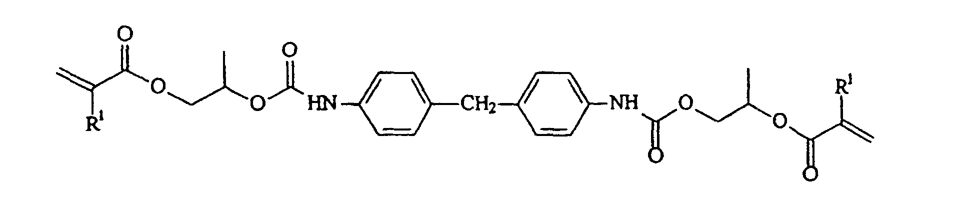 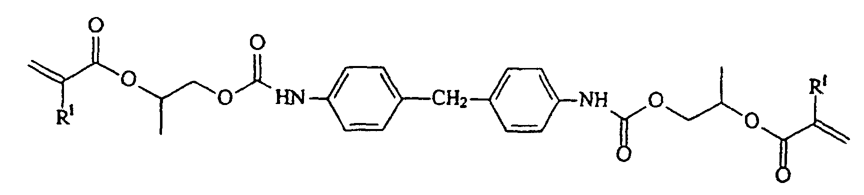 wobei der Rest R¹ jeweils unabhängig voneinander Wasserstoff oder einen Methylrest bedeutet;
Aminoalkyl(meth)acrylate, wie tris(2-Methacryloxyethyl)amin, N-Methylformamidoethyl(meth)acrylat, 3-Diethylaminopropyl(meth)acrylat, 2-Ureidoethyl(meth)acrylat;
carbonylhaltige (Meth)acrylate, wie 2-Carboxyethyl(meth)acrylat, Carboxymethyl(meth)acrylat, Oxazolidinylethyl(meth)acrylat, N-(Methacryloyloxy)formamid, Acetonyl(meth)acrylat, N-(2-Methacryloyloxyethyl)-2-pyrrolidinon, N-(3-Methacryloyloxypropyl)-2-pyrrolidinon, N-Methacryloylmorpholin, N-Methacryloyl-2-pyrrolidinon;
(Meth)acrylate von Etheralkoholen, wie Tetrahydrofurfuryl(meth)acrylat, Vinyloxyethoxyethyl(meth)acrylat, Methoxyethoxyethyl(meth)acrylat, 1-Butoxypropyl(meth)acrylat, 1-Methyl-(2-vinyloxy)ethyl(meth)acrylat, Cyclohexyloxymethyl(meth)acrylat, Methoxymethoxyethyl(meth)acrylat, Benzyloxymethyl(meth)acrylat, Furfuryl(meth)acrylat, 2-Butoxyethyl(meth)acrylat, 2-Ethoxyethoxymethyl(meth)acrylat, 2-Ethoxyethyl(meth)acrylat, Allyloxymethyl(meth)acrylat, 1-Ethoxybutyl(meth)acrylat, Methoxymethyl(meth)acrylat, 1-Ethoxyethyl(meth)acrylat, Ethoxymethyl(meth)acrylat;
(Meth)acrylate von halogenierten Alkoholen, wie 2,3-Dibromopropyl(meth)acrylat, 4-Bromophenyl(meth)acrylat, 1,3-Dichloro-2-propyl(meth)acrylat, 2-Bromoethyl(meth)acrylat, 2-Iodoethyl(meth)acrylat, Chloromethyl(meth)acrylat;
Oxiranyl(meth)acrylate, wie 2,3-Epoxybutyl(meth)acrylat, 3,4-Epoxybutyl(meth)acrylat, 2,3-Epoxycyclohexyl(meth)acrylat, 10,11-Epoxyundecyl(meth)acrylat, Glycidyl(meth)acrylat;
Amide der (Meth)acrylsäure, wie N-(3-Dimethylaminopropyl)(meth)acrylamid, N-(Diethylphosphono)(meth)acrylamid, 1-(Meth)acryloylamido-2-methyl-2-propanol, N-(3-Dibutylaminopropyl)(meth)acrylamid, N-t-Butyl-N-(diethylphosphono)(meth)acrylamid, N,N-bis(2-Diethylaminoethyl)(meth)acrylamid, 4-(Meth)acryloylamido-4-methyl-2-pentanol, N-(Methoxymethyl)(meth)acrylamid, N-(2-Hydroxyethyl)(meth)acrylamid, N-Acetyl(meth)acrylamid, N,N-(Dimethylaminoethyl)(meth)acrylamid, N-Methyl-N-phenyl(meth)acrylamid, N,N-Diethyl(meth)acrylamid, N-Methyl(meth)acrylamid, N,N-Dimethyl(meth)acrylamid, N-Isopropyl(meth)acrylamid;
heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrol idon;
Phosphor-, Bor- und/oder Silicium-haltige (Meth)acrylate, wie 2-(Dimethylphosphato)propyl(meth)acrylat, 2-(Ethylenphosphito)propyl(meth)acrylat 2,3-Butylenmethacryloylethylborat, 2-(Dimethylphosphato)propylmethacrylat, Methyldiethoxymethacryloylethoxysilan, Diethylphosphatoethylmethacrylat, Dimethylphosphinomethyl(meth)acrylat, Dimethylphosphonoethyl(meth)acrylat, Diethyl(meth)acryloylphosphonat, Dipropyl(meth)acryloylphosphat;
schwefelhaltige (Meth)acrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis(meth)acryloyloxyethyl)sulfid;
Tri(meth)acrylate, wie Trimethyloylpropantri(meth)acrylat und Glycerintri(meth)acrylat;
Bis(allylcarbonate), wie Ethylenglykol-bis(allylcarbonat), 1,4-Butandiolbis(allylcarbonat), Diethylenglykol-bis(allylcarbonat);
Vinylhalogenide, wie beispielsweise Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäure und Maleinsäurederivate, wie beispielsweise Mono- und Diester der Maleinsäure, wobei die Alkoholreste 1 bis 9 Kohlenstoffatome aufweisen,
Maleinsäureanhydrid, Methylmaleinsäureanhydrid, Maleinimid, Methylmaleinimid;
Fumarsäure und Fumarsäurederivate, wie beispielsweise Mono- und Diester der Fumarsäure, wobei die Alkoholreste 1 bis 9 Kohlenstoffatome aufweisen;
sowie Diene, wie beispielsweise 1,2-Divinylbenzol, 1,3-Divinylbenzol, 1,4-Divinylbenzol, 1,2-Diisopropenylbenzol, 1,3-Diisopropenylbenzol und 1,4-Diisopropenylbenzol.

In diesem Zusammenhang umfasst der Ausdruck (Meth)acrylate Methacrylate und Acrylate sowie Mischungen aus beiden. Dementsprechend umfasst der Ausdruck (Meth)acrylsäure Methacrylsäure und Acrylsäure sowie Mischungen aus beiden.

Die ethylenisch ungesättigten Monomere können einzeln oder als Mischungen eingesetzt werden.

Zu den bevorzugten ungesättigten Verbindungen A) gehören Acrylate, Methacrylate und/oder Vinylaromaten, insbesondere Methylmethacrylat, n-Butyl(meth)acrylat, Ethylhexylacrylat und/oder Styrol.

Erfindungsgemäß ganz besonders bewährt hat sich der Einsatz von Reaktionsharzen, die

| A-1) (Meth)acrylat | 10 - 100 Gew.-%, wobei |
|---|---|
| C₁ - C₆ (Meth)acrylat | 0 - 97 Gew.-%, |
| ≥ C₇ (Meth)acrylat | 0 - 50 Gew.-% und |
| mehrwertige (Meth)acrylate | 0,1 - 10 Gew.-% sind, |

und gegebenenfalls

| A-2) Comonomeren | 0 - 90 Gew.-%, wobei |
|---|---|
| Vinylaromaten | 0 - 30 Gew.-% und |
| Vinylester | 0 - 30 Gew.-% sind, |

enthalten, wobei die Summe der Komponenten A-1) und A-2) 100 Gew.-% ergibt.

Dabei werden (Meth)acrylate, deren Alkoholrest eins bis fünf Kohlenstoffatome enthält, bevorzugt. Längerkettige Ester, also Verbindungen deren Alkoholrest 7 oder mehr Kohlenstoffatome aufweist, machen die Beschichtungen zwar flexibler, aber auch weicher, so dass ihre Gebrauchseigenschaften eingeschränkt werden. Ihr Anteil ist daher vorzugsweise auf 50 Gew.-% beschränkt.

Die Komponente A) enthält zweckmäßigerweise zwischen 0,1 und 10 Gew.-% eines oder mehrerer mehrwertiger (Meth)acrylate.

Hierzu zählen unter anderem di-, tri- und mehrfachfunktionelle Verbindungen. Besonderen Vorzug genießen difunktionelle (Meth)acrylate sowie trifunktionelle (Meth)acrylate.

### (a) Difunktionelle (Meth)acrylate

Verbindungen der allgemeinen Formel: 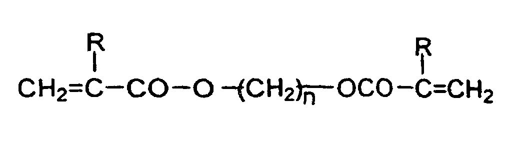 worin R Wasserstoff oder Methyl ist und n eine positive ganze Zahl zwischen 3 und 20, wie z. B. Di(meth)acrylat des Propandiols, Butandiols, Hexandiols, Octandiols, Nonandiols, Decandiols und Eicosandiols;

Verbindungen der allgemeinen Formel: 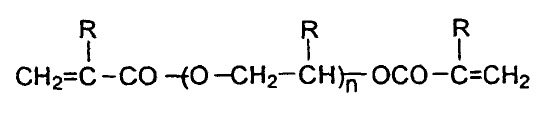 worin R Wasserstoff oder Methyl ist und n eine positive ganze Zahl zwischen 1 und 14 bedeutet, wie z. B. Di(meth)acrylat des Ethylenglycols, Diethylenglycols, Triethylenglycols, Tetraethylenglycols, Dodecaethylenglycols, Tetradecaethylenglycols, Propylenglycols, Dipropylglycols und Tetradecapropylenglycols;
und Glycerindi(meth)acrylat, 2,2'-Bis[p-(g-methacryloxy-bhydroxypropoxy)-phenylpropan] oder Bis-GMA, Biphenol-Adimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan.

### (b) Tri- oder mehrfachfunktionelle (Meth)acrylate

Trimethylolpropantri(meth)acrylate und Pentaerythritoltetra(meth)acrylat.

### (c) Urethan(meth)acrylate

Umsetzungsprodukte von 2 Mol hydroxylgruppenhaltigem (Meth)acrylatmonomer mit einem Mol Diisocyanat und Umsetzungsprodukte eines zwei NCO Endgruppen aufweisenden Urethanprepolymers mit einem methacrylischen Monomer, das eine Hydroxylgruppe aufweist, wie sie z. B. durch die allgemeine Formel wiedergegeben werden: 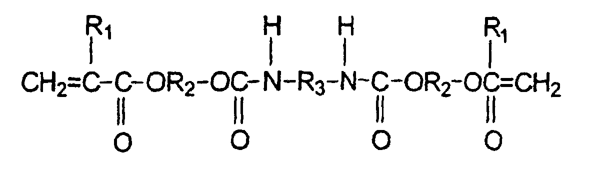 worin R₁ Wasserstoff oder eine Methylgruppe bedeutet, R₂ eine Alkylengruppe und R₃ einen organischen Rest verkörpert.

Die genannten vemetzend wirkenden Monomeren a) bis c) werden entweder allein oder in Form einer Mischung von mehreren Monomeren verwendet.

Zu den ganz besonders vorteilhaft einsetzbaren mehrwertigen Monomeren gehören vor allem Trimethylolpropantrimethacrylat (TRIM), 2,2-Bis-4(3-methacryloxy-2-hydroxypropoxy)-phenylpropan (Bis-GMA), 3,6-Dioxaoctamethylendimethacrylat (TEDMA), 7,7,9-Trimethyl-4,13-dioxo-3,14-dioxa-5,12-diaza-hexadecan-1,16-dioxy-dimethacrylat (UDMA) und/oder 1,4-Butandioldimethacrylat (1,4-BDMA). Von diesen ist wiederum 1,4-Butandioldimethacrylat bei weitem bevorzugt.

Comonomere im Sinne dieser bevorzugten Ausführungsform sind alle ethylenisch ungesättigten Verbindungen, die mit oben genannten (Meth)acrylaten copolymerisierbar sind. Zu diesen gehören u.a. Vinylester, Vinylchlorid, Vinylidenchlorid, Vinylacetat, Styrol, substituierte Styrole mit einem Alkylsubstituenten in der Seitenkette, wie z.B. α-Methylstyrol und α-Ethylstyrol, substituierte Styrole mit einem Alkylsubstituenten am Ring, wie beispielsweise Vinyltoluol und p-Methylstyrol, halogenierte Styrole, wie beispielsweise Monochlorstyrole, Dichlorstyrole, Tribromstyrole und Tetrabromstyrole, Vinyl-und Isopropenylether, Maleinsäurederivate, wie beispielsweise Maleinsäureanhydrid, Methylmaleinsäureanhydrid, Maleinimid, Methylmaleinimid, Phenylmaleinimid und Cyclohexylmaleinimid, und Diene, wie beispielsweise 1,3-Butadien und Divinylbenzol.

Der Anteil der Comonomere ist vorzugsweise auf maximal 90 Gew.-%, insbesondere auf höchstens 50 Gew.-% der Summe der Komponenten A-1) und A-2) beschränkt, da andernfalls die mechanischen Eigenschaften der auspolymerisierten Beschichtungen nachteilig beeinflusst werden können. Der Anteil der Vinylaromaten ist hierbei vorzugsweise auf 30 Gew.-% der Summe der Komponenten A-1) und A-2) begrenzt, da höhere Anteile zu einer Entmischung des Systems führen können. Der Anteil der Vinylester ist vorzugsweise ebenfalls auf 30 Gew.-% der Summe der Komponenten A-1) und A-2) limitiert, da diese bei tiefen Temperaturen nur ungenügend durchhärten und zu einem ungünstigen Schrumpfverhalten neigen.

Alle oben genannten Monomere, die in der Komponenten A) enthalten sein können, sind kommerziell erhältlich.

### Die Komponente B)

Zur Einstellung der Viskosität des Reaktionsharzes und der Verlaufseigenschaften sowie zur besseren Härtung oder anderen Eigenschaften des Harzes oder der auspolymerisierten Beschichtung kann der Komponenten A) ein Polymer oder ein Prepolymer zugegeben werden. Dieses (Pre)polymer soll in der Komponenten A) löslich oder quellbar sein. Auf ein Gewichtsteil A) werden vorzugsweise zwischen 0 und 2 Gewichtsteile des (Pre)polymers eingesetzt.

Insbesondere sind z.B. Poly(meth)acrylate als Komponente B) geeignet, die als festes Polymerisat in A) gelöst werden können. Sie können ebenfalls als sogenannte Sirupe, d.h. als teilweise polymerisierte Massen entsprechender Monomere verwendet werden.

Weiterhin sind u.a. Polyvinylchloride, Polyvinylacetate, Polystyrole, Epoxidharze, Epoxid(meth)acrylate, ungesättigte Polyester, Polyurethane oder Mischungen hiervon oder mit oben genannten Poly(meth)acrylaten als Komponente B) geeignet. Die genannten (Pre)polymere können auch als Copolymere eingesetzt werden.

Zu im Rahmen der Erfindung mit besonderem Erfolg einsetzbaren (Pre)polymeren gehören u.a. Bindemittel auf Basis von (Meth)acrylaten, die kein Monomer freisetzen, wie beispielsweise ®DEGALAN LP, welches von der Firma Röhm GmbH erhältlich ist.

Diese Polymere dienen beispielsweise zur Regulierung der Flexibilitätseigenschaften, der Schrumpfregulierung, als Stabilisator, als Hautbildner sowie als Verlaufsverbesserer.

Die oben genannten (Pre)polymere sind im allgemeinen kommerziell erhältlich. Sie können aber auch auf eine dem Fachmann bekannte Weise hergestellt werden.

Vorzugsweise enthalten Reaktionsharze, die zur Herstellung dünner Beschichtungen einer Dicke unter 5 mm entwickelt werden, mindestens 1 Gew.-%, besonders bevorzugt mindestens 10 Gew.-% eines Polymers, z.B. eines Poly(meth)acrylats, bezogen auf die Summe A) + B).

### Die Komponente C)

Reaktivharze neigen bei der Aushärtung zur Luftinhibierung. Dies führt dazu, dass die oberen Harzschichten, die mit Luft in Kontakt treten können, in erhöhtem Maße klebrig bleiben und nicht fest werden, wie der Rest der Masse. Zur Verhinderung bzw. Verbesserung dieses Verhaltens werden daher einem Reaktivharz, insbesondere einem Methacrylatharz, Paraffine und/oder Wachse zugesetzt, die sich in ihrer Konzentration bevorzugt nahe der Löslichkeitsgrenze befinden. Beim Verdampfen von Rezepturbestandteilen wird die Löslichkeitsgrenze überschritten, es bildet sich ein feiner Paraffinfilm auf der Oberfläche, welcher eine Luftinhibierung der oberen Harzschichten wirksam verhindert und so zu einer trockenen Oberfläche führt.

Bei Wachsen und Paraffinen handelt es sich im allgemeinen um unpolare Substanzen, die sich im flüssigen, unausgehärteten Harz lösen. Mit zunehmender Vernetzung während der Polymerisation nimmt ihre Verträglichkeit mit dem Harz ab, so dass sie eine zweite Phase bilden und an die Oberfläche der polymerisierenden Harzmasse migrieren können. Sie sind dann in der Lage, einen geschlossenen Film an der Oberfläche zu bilden, und können diese Masse gegenüber dem Luftsauerstoff absperren. Durch diesen Ausschluss des Sauerstoffs wird die Auspolymerisation des Harzes an seiner Oberfläche unterstützt. Insbesondere verringert der Zusatz von Wachsen und/oder Paraffinen somit die Klebrigkeit der Oberfläche, so dass der Inhibitorwirkung von Sauerstoff entgegengewirkt werden kann.

Prinzipiell sind alle Substanzen geeignet, die das oben beschriebene Verhalten einer homogenen Oberflächenschichtbildung bei Unterschreitung der Löslichkeitsgrenzen zeigen.

Zu geeigneten Wachsen gehören unter anderem Paraffin, mikrokristallines Wachs, Carnauba-Wachs, Bienenwachs, Lanolin, Walfischtran, Polyolefinwachse, Ceresin, Candelilla-Wachs und dergleichen.

Als besonders geeignet haben sich aber Paraffine erwiesen. Diese bestehen überwiegend aus geradkettigen Kohlenwasserstoffen der allgemeinen Formel CₙH₂ₙ₊₂ mit n = 10 - 70 und einem Anteil an iso- und Cycloalkanen/-paraffinen von 0 bis 60 %. Diese aus den Vakuumdestillationsschnitten leichter und mittlerer Schmieröle erhaltenen Wachse besitzen den Vorteil, dass sie unter den in (Meth)acrylatharzen vorherrschenden Bedingungen extrem unreaktiv sind. Sie sind unlöslich in Wasser und kaum löslich in niedermolekularen aliphatischen Alkoholen und Ethem. Sie sind besser löslich in Ketonen, Chlorkohlenwasserstoffen, Benzin, Benzol, Toluol, Xylol und höheren Aromaten. Die Löslichkeit nimmt mit höherem Schmelzpunkt, d. h. mit zunehmender Molmasse des Wachses ab. Die Erweichungspunkte der makrokristallinen Paraffine liegen zwischen 35 und 72. Die marktüblichen Produkte zeigen Viskositäten bei 100 °C zwischen 2 und 10 mm²/s.

Bevorzugt für den Einsatz in Reaktivharzen, insbesondere für Bodenbeschichtung haben sich unter anderem vollständig raffinierte und entölte Wachse erwiesen. Der Ölgehalt dieser Typen liegt maximal bei 2,5 %. Besonderer Vorzug wird Produkten mit einem Erweichungspunkt zwischen 40°C und 60°C und einer Viskosität bei 100 °C von 2,0 bis 5,5 mm²/s gegeben.

Vorzugsweise werden die Wachse und/oder Paraffine in Mengen von 0,1 bis 5 Gew.-%, bevorzugt 1 Gew.-%, bezogen auf das Gesamtgewicht der Komponenten A) bis B), zugesetzt. Überschreitet die zugesetzte Menge an Wachs und/oder Paraffin eine Menge von 5 Gew.-% deutlich, so kann dies einen nachteiligen Einfluss auf die Festigkeit der Bodenbeschichtung haben. Unterschreitet die zugesetzte Menge an Wachs und/oder Paraffin eine Menge von 0,1 Gew.-%, so härten die geruchsverminderten Harze nicht klebefrei aus.

Da die Paraffine und/oder Wachse durch Verdunstung ihre erfindungsgemäße Wirkung zeigen, ist es günstig, dass die Komponente A) genügend Verdunstung aufweist. Daher werden Monomere (Meth)acrylat mit Estergruppen, welche 1 - 6 C-Atome aufweisen, besonders bevorzugt.

### Die Komponente D)

Das Reaktionsharz ist zweckmäßigerweise zur Kalthärtung geeignet, d.h. zur Polymerisation enthält es vorzugsweise ein Redoxsystem aus einem Beschleuniger und einem peroxidischen Katalysator oder Initiator. Die Mengen, in denen diese Beschleuniger und Initiatoren zugegeben werden, sind vom jeweiligen System abhängig und vom Fachmann durch Routineuntersuchungen zu ermitteln. Sie sollten jedoch zur Kalthärtung der Komponente A) ausreichen.

Der Beschleuniger wird üblicherweise in einer Menge von 0,01 bis 5 Gew.-%, vorzugsweise 0,5 bis 1,5 Gew.-%, bezogen auf die Summe aus den Komponenten A) bis E), eingesetzt. Zu den als Beschleuniger besonders geeigneten Verbindungen gehören unter anderem Amine und Mercaptane, wie beispielsweise N,N-Dimethyl-p-toluidin, N,N-Diisopropoxy-p-toluidin, N,N-Bis-(2-Hydroxyethyl)-p-toluidin, N,N-Dimethylanilin und Glykoldimercaptoacetat, wobei N,N-Bis-(2-Hydroxyethyl)-p-toluidin und N,N-Dimethyl-p-toluidin ganz besonders bevorzugt sind.

Des weiteren können als Beschleuniger organische Metallsalze dienen, die üblicherweise im Bereich von 0,001 bis 2 Gew.-%, bezogen auf die Summe aus den Komponenten A) bis E), eingesetzt werden. Zu diesen gehören u.a. Kupfernaphthenat und Kupferoleat.

Als peroxidischer Katalysator oder Initiator eignen sich insbesondere Verbindungsgruppen wie Ketonperoxide, Diacylperoxide, Perester, Perketale sowie Mischungen von Verbindungen dieser Gruppen miteinander sowie mit nicht genannten wirksamen Härtern und Initiatoren.

Besonders bevorzugt werden für diesen Zweck Verbindungen, wie Methylethylketonperoxid, Acetylacetonperoxid, Ketonperoxid, Methylisobutylketonperoxid, Cyclohexanonperoxid, Dibenzoylperoxid, tert-Butylperoxybenzoat, tert-Butylperoxy isopopyl carbonat, 2,5-Bis-(2-ethylhexanoyl-peroxy)-2,5-dimethylhexan, tert-Butylperoxy-2-ethylhexanoat, tert-Butylperoxy-3,5,5-trimethylhexanoat, 1,1-Bis-(tert-butylperoxy)-cyclohexan, 1,1-Bis-(tert-butylperoxy)-3,3,5-trimethylcyclohexan, Cumylhydroperoxid, tert-Butylhydroperoxid, Dicumylperoxid, Bis-(4-tert-butylcyclohexyl)-peroxydicarbonat, Mischungen aus Keton-Peroxid-Typen, Perester-Typen, sowie Mischungen von zwei oder mehr der vorgenannten Verbindungen miteinander. Von den oben genannten Verbindungen ist Dibenzoylperoxid besonders zweckmäßig.

Die Initiatoren werden üblicherweise in einer Menge im Bereich von 0,1 bis 10 Gew.-%, vorzugsweise von 0,5 bis 5 Gew.-%, bezogen auf die Summe aus den Komponenten A) bis E), eingesetzt. Im Harz können von der Komponente D) schon die Beschleuniger, z. B. N,N-Dimethyl-p-toluidin, enthalten sein, ohne dass eine Polymerisation bei Umgebungstemperatur stattfindet. Durch Zugabe der restlichen Bestandteile der Komponente D) wird die Reaktion gestartet, wobei die Komponente D) üblicherweise so bemessen ist, dass das (Meth)acrylat-System eine Topfzeit von 10 min bis 20 min hat. Das erfindungsgemäße (Meth)acrylat-System enthält also nur unmittelbar vor der Anwendung die vollständige Komponente D), bis zum Gebrauch ist die Komponente D) nicht oder nur zum Teil enthalten, oder mit anderen Worten, das vollständige funktionsfähige Redoxsystem ist bis zur Polymerisation der polymerisierbaren Bestandteile von diesen fernzuhalten, während einzelne Bestandteile des Redoxsystems bereits mit polymerisierbaren Substanzen vorgemischt sein können.

### Die Komponente E)

Die Komponente E) ist optionell. Hierzu gehören eine Vielzahl von in (Meth)acrylat-Reaktionsharz für Bodenbeschichtungen üblichen Additiven. Beispielhaft seien nur genannt:
Abbindemittel, Antistatika, Antioxidantien, Biostabilisatoren, chemische Treibmittel, Entformungsmittel, Flammschutzmittel, Schmiermittel, Farbmittel, Fließverbesserungsmittel, Füllstoffe, Gleitmittel, Haftvermittler, Inhibitoren, Katalysatoren, Lichtschutzmittel, optische Aufheller, organische Phosphite, Öle, Pigmente, Schlagzähigkeitsverbesserer, Verstärkungsmittel, Verstärkungsfasem, Verwitterungsschutzmittel und Weichmacher.

Diese optionellen Additive können in wechselnden Mengen im Reaktionsharz enthalten sein. Einige Additive sind im Rahmen der Erfindung besonders bevorzugt, wie beispielsweise die Zusatzstoffe der Gruppen E1) bis E4).

### Die Gruppe E1)

Besonderes Interesse als Zusätze zu den Reaktionsharzen verdient die Gruppe der Inhibitoren E1).

Der polymerisierbaren Harzmischung werden zum Schutz vor unerwünschter, vorzeitiger Aushärtung zweckmäßigerweise Inhibitoren zugesetzt werden. Diese wirken als Radikalkettenabbruchreagenzien zum Abfangen der üblicherweise vorhandenen Radikale und erhöhen die Lagerfähigkeit der Harzzubereitungen erheblich. Bei gewollt durch Zugabe organischer Peroxide initiierter Aushärtung besitzen die zugefügten Inhibitoren jedoch den Vorteil, schnell überfahrbar zu sein. Eingesetzt werden hauptsächlich 1,4-Dihydroxybenzole. Es können jedoch auch anders substituierte Dihydroxybenzole zum Einsatz kommen. Allgemein lassen sich derartige Inhibitoren mit der allgemeinen Formel (E1.I) wiedergeben 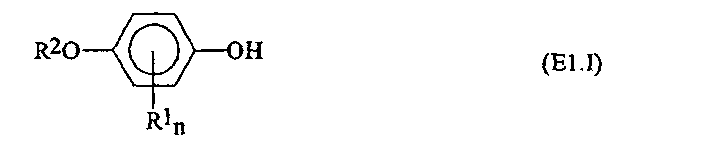 worin
R¹ einen linearen oder verzweigten Alkylrest mit eins bis acht Kohlenstoffatomen, Halogen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, Cl, F oder Br; n eine ganze Zahl im Bereich von eins bis vier, vorzugsweise eins oder zwei ist; und
R² Wasserstoff, einen linearen oder verzweigten Alkylrest mit eins bis acht Kohlenstoffatomen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl oder tert.-Butyl.

Es können jedoch auch Verbindungen mit 1,4-Benzochinon als Stammverbindung eingesetzt werden. Diese lassen sich mit der Formel (E l.II) beschreiben 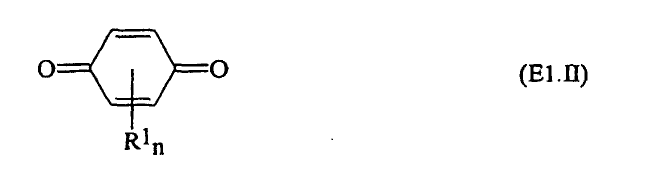 worin
R¹ einen linearen oder verzweigten Alkylrest mit eins bis acht Kohlenstoffatomen, Halogen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, Cl, F oder Br; und
n eine ganze Zahl im Bereich von eins bis vier, vorzugsweise eins oder zwei ist.

Ebenso werden Phenole der allgemeinen Struktur (El.III) eingesetzt 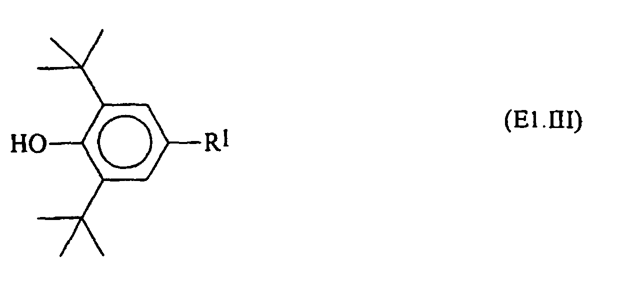 worin
R¹ einen linearen oder verzweigten Alkylrest mit eins bis acht Kohlenstoffatomen, Aryl oder Aralkyl, Proprionsäureester mit 1 bis 4 wertigen Alkoholen, welche auch Heteroatome wie S, O und N enthalten können, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, bedeutet.

Eine weitere vorteilhafte Substanzklasse stellen gehinderte Phenole auf Basis von Triazinderivaten der Formel (El.IV) dar 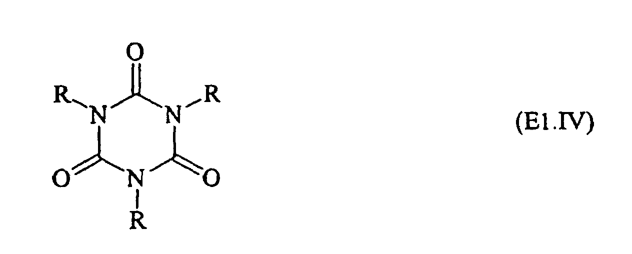 mit R = Verbindung der Formel (E1.V) 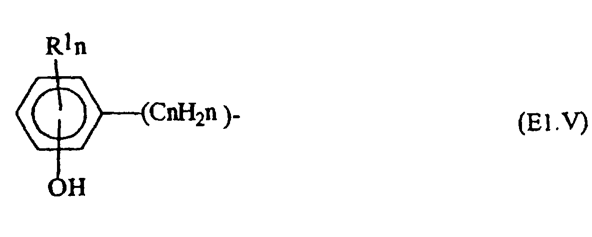 worin
R¹ = CₙH₂ₙ₊₁
mit n = 1 oder 2 ist.

Besonders erfolgreich werden die Verbindungen 1,4-Dihydroxybenzol, 4-Methoxyphenol, 2,5-Dichloro-3,6-dihydroxy-1,4-benzochinon, 1,3,5-Trimethyl-2,4,6-tris-(3,5-di-tert.butyl-4-hydroxybenzyl)-benzol, 2,6-Di-tert. butyl-4-methylphenol, 2,4-Dimethyl-6-tert. butylphenol, 2,2-Bis-[3,5-Bis-(1,1-dimethylethyl)-4-hydroxyphenyl-1-oxoperopoxymethyl)]-1,3-propandiylester, 2,2'-Thiodiethylbis-[3-(3,5-di-tert.butyl-4-hydroxyphenyl)]-propionat, Octadecyl-3-(3,5-di-tert.butyl-4-hydroxyphenyl)-propionat, 3,5-Bis-(1,1-dimethylethyl-2,2-Methylenbis-(4-methyl-6-tert.butyl)-phenol, Tris-(4-tert.butyl-3-hydroxy-2,6-dimethylbenzyl)-s-triazin-2,4,6-(1H,3H,5H)-trion, Tris-(3,5-ditert.butyl-4-hydroxy)-s-triazin-2,46-(1H, 3H,5H)-trion oder tert. Butyl-3,5-dihydroxybenzol eingesetzt.

Bezogen auf das Gewicht der Gesamtrezeptur des Harzes beträgt der Anteil der Inhibitoren einzeln oder als Mischung im allgemeinen 0,0005 - 1,3 % (wt/wt).

### Die Gruppe E2)

Noch eine wichtige Substanzgruppe innerhalb der Additive und Zusatzstoffe sind die Füllstoffe E2).

Als Füllstoffe und/oder Pigmente in der flüssigen Harzzubereitung eignen sich alle üblichen Zusätze wie z. B. natürliche und synthetische Calciumcarbonate, Dolomite, Calciumsulfate, Silikate wie z. B. Aluminiumsilikat, Zirkonsilikat, Talkum, Kaolin, Glimmer, Feldspat, Nephelin-Syelit, Wollastonit, aber auch Glaskugeln oder Silikatkugeln, Siliziumdioxid in Form von Sand, Quarz, Quarzit, Novaculit, Perlit, Tripoli und Diatomeenerde, Bariumsulfate, Carbide wie z. B. SiC, Sulfide (z.B. MoS₂, ZnS) oder auch Titanate wie z. B. BaTiO₃, Molybdate wie z. B. Zink-, Calcium-, Barium-, Strontiummolybdate, Phosphate wie z.B. Zink-, Calcium, Magnesium. Ebenfalls gut geeignet sind Metallpulver oder Metalloxide wie z. B. Al-Pulver, Silberpulver oder Aluminiumhydroxid. Auch zum Einsatz kommen Ruße, Graphitpulver, Holzmehl, synthetische Fasern (Basis Polyethylenterephthalat, Polyvinylalkohol), Basaltfasern, C-Fasem, Aramidfasern, Polybenzinidazolfasern, PEEK-Fasern, Polyethylenfasern, Borfasern, Keramikfasern. Übliche prozentuale Mengen bezüglich der Gesamtrezeptur liegen zwischen 0 und 60 % wt/wt.

### Die Gruppe E3)

Von besonderem Interesse unter den möglichen Additiven ist auch die Gruppe der Antioxidantien und Wärmestabilisatoren E3).

Diese Verbindungen sind dem Fachmann an sich geläufig. Beispielhaft für eine Vielzahl in Frage kommender Zusätze seien genannt: Chloranilsäure (2,5-Dichloro-3,6-dihydroxy-1,4-benzochinon, Hydrochinon (1,4-Dihydroxybenzol), Irganox 1330 (1,3,5-Trimethyl-2,4,6-tris-(3,5-di-tert.Butyl-4-hydroxybenzyl)-benzol, Vulkanox BHT (2,6-Di-tert.butyl-4-methylphenol), 4-tert-Butylbrenzcatechin, Verbindungen der allgemeinen Formel E3.I) 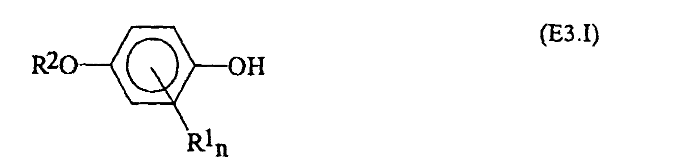 worin n eine ganze Zahl im Bereich von 1 bis 4 ist, R¹ einen substituierten oder unsubstituierten, linearen oder verzweigten Alkylrest mit 1 bis 8 Kohlenstoffatomen, vorzugsweise mit 1 bis 4 Kohlenstoffatomen, einen Arylrest oder Halogen, vorzugsweise Chlor, Fluor oder Brom, bedeutet, und R² Wasserstoff oder ein substituierter oder unsubstituierter, linearer oder verzweigter Alkylrest mit 1 bis 8 Kohlenstoffatomen, vorzugsweise mit 1 bis 4 Kohlenstoffatomen, ist, Irganox 1010 (3,5-Bis-(1,1-dimethylethyl-2,2-Methylenbis-(4-Methyl-6-tertbutyl)-phenol), Irganox 1035 (2,2'-Thiodiethylbis-(3-(3,5-di-tert-butyl-4-hydroxyphenyl)-propionat), Irganox 1076 (Octadecyl-3-(3,5-di-tert butyl-4-hydroxyphenyl)-propionat, Topanol O, Cyanox 1790 (Tris-(4-tert.butyl-3-hydroxy-2,6-dimethylbenzyl)-5-triazin-2,4,6-(1H,3H,5H)trion), Irganox 1098 und dergleichen.

### Die Gruppe E4)

Eine weitere Gruppe von besonderen Zusätzen ist die Gruppe der Weichmacher (E4).

Weichmacher dienen z.B. als Aufnehmer für Peroxidkomponenten für das automatische 2-Komponenten Mischverfahren (Phlegmatisierungsmittel), zur Regulierung der Druck- und Biegezugfestigkeit sowie zum Einstellen der Oberflächenspannung.

Für die Verwendung in Reaktionsharzen bekannte Weichmacher sind z.B. Phthalsäureester, Adipinsäureester, Chlorparaffine, Harnstoffharze, Melaminharze, modifizierte Phenolate, Polyglykolurethane.

Dabei enthalten die Reaktionsharze vorzugsweise bis zu 7 Gewichtsteile, insbesondere bis zu 2 Gewichtsteile eines Weichmachers auf 10 Gewichtsteile der Summe aus A) + B).

Im Rahmen der vorliegenden Erfindung leitet man während dem Auftragen der Beschichtungsmasse mittels einer Überdruckbelüftungsvorrichtung einen Gasstrom über die zu beschichtende Fläche. Dabei dient der Gasstrom u. a. dazu, eventuell geruchsbelästigende und/oder gesundheitsschädliche Dämpfe, die aus der Beschichtungsmasse stammen, möglichst rasch zu entfernen, so dass beim Auftragen der Beschichtungsmasse eine Geruchsbelästigung und/oder Gesundheitsgefährdung nach Möglichkeit vermieden wird, so dass das Tragen spezieller Schutzkleidung nicht mehr unbedingt erforderlich ist. Geeignete Überdruckbelüftungsvorrichtungen sind dem Fachmann aus dem Stand der Technik bekannt, sie umfassen beispielsweise Gebläsevorrichtungen, insbesondere Hochleistungsventilatoren. Dabei werden erfindungsgemäß eine oder mehrere mobile Überdruckbelüftungsvorrichtungen eingesetzt, wobei der Begriff "mobile Überdruckbelüftungsvorrichtungen" in diesem Zusammenhang nicht mit der Umgebung, insbesondere mit einem Gebäude, fest verbundene Überdruckbelüftungsvorrichtungen bezeichnet. Hiervon zu unterscheiden sind stationäre Überdruckbelüftungsvorrichtungen, d. h. solche Überdruckbelüftungsvorrichtungen, die fest mit der Umgebung, insbesondere mit einem Gebäude verbunden sind. Der Einsatz von mobilen Überdruckbelüftungsvorrichtungen ist insbesondere deshalb vorteilhafr, weil er je nach lokaler Gegebenheit eine optimale Platzierung und Ausrichtung der Überdruckbelüftungsvorrichtungen erlaubt. Somit kann unter Verwendung von mobilen Überdruckbelüftungsvorrichtungen, die leicht transportabel und schnell aufbaubar und ausrichtbar sind, eine effektive Entfernung gesundheitsschädlicher Dämpfe und Gase erreicht werden. Die Art des erfindungsgemäß einzusetzenden Gases ist prinzipiell beliebig. Dennoch hat es sich als besonders vorteilhaft erwiesen, Luft über die zu beschichtende Fläche zu leiten.

Zweckmäßigerweise wird die Zusammensetzung des Gasstroms über die Zeitdauer des Verfahrens konstant gehalten, um möglichst gleichmäßige Aushärtebedingungen und somit gleichmäßige Materialeigenschaften der Beschichtung zu gewährleisten. Die Temperatur des Gasstroms beträgt vorzugsweise -20°C bis 100°C, besonders bevorzugt 10°C bis 50°C, insbesondere 10°C bis 30°C.

Das erfindungsgemäße Verfahren ist insbesondere für das Auftragen von Beschichtungen in Gebäuden, insbesondere in geschlossenen Räumen und großen Fabrikhallen, geeignet. Durch den Gasstrom werden eventuell geruchsbelästigende und/oder gesundheitsschädliche Dämpfe, die aus der Beschichtungsmasse stammen, möglichst rasch entfernt, so dass ihre Konzentration in dem Gebäude abgesenkt und die vorgeschriebenen MAK-Werte eingehalten werden.

Die mindestens eine Überdruckbelüftungsvorrichtung ist vorzugsweise mit Abstand vor einer Öffnung in einer Wand des Gebäudes außerhalb des Gebäudes angeordnet, um einen zu starken Druckanstieg im Gebäude nach Möglichkeit zu verhindern und einen möglichst effektiven Gasaustausch im Gebäude zu ermöglichen. Zur Vermeidung von Verwirbelungen im Gebäude und somit zur Gewährleistung einer gleichmäßigen Aushärtung der Beschichtungsmasse hat es sich dabei als ganz besonders zweckmäßig erwiesen, dass man den Gasstrom durch mindestens eine Entlüftungseinrichtung aus dem Gebäude leitet, die vorzugsweise in Strömungsrichtung des Gases angeordnet ist. Ganz besonders vorteilhafte Ergebnisse können erzielt werden, wenn man einen laminaren Gasstrom über die zu beschichtende Fläche leitet.

Im Rahmen einer besonders bevorzugten Ausführungsform des erfindungsgemäßen Verfahrens wird der durch die mindestens eine Überdruckbelüftungsvorrichtung erzeugte Gasstrom mit mindestens einer von der Überdruckbelüftungsvorrichtung getrennten, beabstandeten und vorzugsweise transportablen Umlenkeinrichtung umgelenkt, wobei die Umlenkeinrichtung zwischen der Überdruckbelüftungsvorrichtung und der zu beschichteten Fläche angeordnet ist. Geeignete Umlenkvorrichtungen sind dem Fachmann aus dem Stand der Technik bekannt, insbesondere aus der Druckschrift EP 690 271 A bekannt, auf deren Offenbarung hiermit explizit bezug genommen wird.

Sie umfassen vorzugsweise eine Eintrittsöffnung, eine Austrittsöffnung und ein zwischen der Eintrittsöffnung und der Austrittsöffnung vorgesehenes Umlenkglied. Durch das Vorsehen einer Umlenkeinrichtung für einen von der Überdruckbelüftungsvorrichtung erzeugten Gasstrom können vorteilhaft bereits vorhandene Überdruckbelüftungsvorrichtung, wie sie beispielsweise zur Belüftung von Räumen aus dem Brandschutz bekannt sind, verwendet werden.

In einfacher Weise wird die Austrittsöffnung der Umlenkeinrichtung in Richtung der zu beschichtenden Fläche und die Eintrittsöffnung in Richtung auf die Überdruckbelüftungsvorrichtung ausgerichtet. Wird nun die Überdruckbelüftungsvorrichtung in Gang gesetzt, wobei die Überdruckbelüftungsvorrichtung in Richtung der Eintrittsöffnung abstrahlt, so trifft der Gasstrom auf das Umlenkglied zwischen der Eintrittsöffnung und der Austrittsöffnung der Umlenkeinrichtung, so dass der Gasstrom in Richtung der zu beschichtenden Fläche umgelenkt wird und die dort befindlichen Gase und Dämpfe durch den einströmenden Gasstrom verdrängt werden.

In vorteilhafter Weise kann die Umlenkeinrichtung transportabel sein.

Damit die erfindungsgemässe Vorrichtung einen möglichst hohen Wirkungsgrad aufweist, kann das Umlenkglied aus einem gasundurchlässigen Werkstoff hergestellt sein. Hierzu können beispielsweise Kunststoffe, metallische Werkstoffe oder beschichteter Stoff verwendet werden.

Durch das Vorsehen eines gasundurchlässigen Werkstoffes wird sichergestellt, dass der grösste Teil des von der Überdruckbelüftungsvorrichtung abgestrahlten Gasstromes umgelenkt wird und nicht durch das Umlenkglied hindurchgeht, wie dies bei der Verwendung eines gasdurchlässigen Werkstoffes der Fall wäre. Eine exakte Ausrichtung der Überdruckbelüftungsvorrichtung auf die Umlenkeinrichtung kann dadurch erleichtert werden, dass die Umlenkeinrichtung über Seile, Stangen oder dergleichen mit der Überdruckbelüftungsvorrichtung verbunden ist.

Sind mindestens zwei Seile, Stangen oder dergleichen für die Verbindung der Umlenkeinrichtung mit der Überdruckbelüftungsvorrichtung vorgesehen, so kann dieses, falls alle Seile, Stangen oder dergleichen dieselbe Länge aufweisen, genau auf das Umlenkglied der Umlenkeinrichtung ausgerichtet werden, so dass die gesamte Vorrichtung effektiv betrieben werden kann.

Ausserdem wird durch die Seile, Stangen oder dergleichen ein Wegblasen der Umlenkeinrichtung durch die Überdruckbelüftungsvorrichtung vermieden, da die Umlenkeinrichtung mit der Überdruckbelüftungsvorrichtung verbunden ist und die auftretenden Kräfte aufgrund des Staudrucks des von der Überdruckbelüftungsvorrichtung erzeugten Luftstromes von den Seilen, Stangen oder dergleichen aufgenommen werden.

Der Abstand zwischen der Umlenkeinrichtung und der Überdruckbelüftungsvorrichtung kann über an den Seilen, Stangen oder dergleichen angebrachten Schnellspanneinrichtungen veränderbar sein. Der Abstand zwischen der Umlenkeinrichtung und der Überdruckbelüftungsvorrichtung kann somit derart verändert werden, dass der beste Wirkungsgrad der erfindungsgemässen Vorrichtung erreicht wird.

Des weiteren ist es vorteilhaft die Ausrichtung der Ausgangsöffnung der Umlenkeinrichtung in Richtung der zu beschichtenden Fläche mit Hilfe üblicher Fixierungsmittel zu fixieren. Dabei werden lösbare Fixierungsverfahren erfindungsgemäß ganz besonders bevorzugt.

Die Auftragungsrichtung der Beschichtung ist prinzipiell beliebig, sie wird zweckmäßigerweise jedoch derart gewählt, dass man die Beschichtungsmasse in entgegengesetzter Richtung zu der Gasströmungsrichtung aufträgt. Auf diese Weise wird gewährleistet, dass eventuell geruchsbelästigende und/oder gesundheitsschädliche Dämpfe, die aus der Beschichtungsmasse stammen, direkt von den auftragenden Person weg entfernt werden.

Das Auftragen und das Aushärten der Beschichtungsmasse erfolgt im Rahmen der vorliegenden Erfindung vorzugsweise bei einer Temperatur im Bereich von -10°C bis +45°C, insbesondere im Bereich von +10°C bis +30°C.

## Patentansprüche

1. Verfahren zur Beschichtung einer Fläche, wobei man eine Beschichtungsmasse mit einer Viskosität < 100 Pa.s, gemessen bei 25°C, auf eine zu beschichtende Fläche aufträgt und aushärten lässt, **dadurch gekennzeichnet, dass** man eine Beschichtungsmasse einsetzt, welche ein Reaktionsharz aufweisend
A) 1 Gewichtsteil mindestens einer ethylenisch ungesättigten Verbindung,
B) 0 - 2 Gewichtsteile eines in A) löslichen oder quellbaren (Pre)polymers,
C) 0 bis 0,15 Gewichtsteilen mindestens eines Paraffins und/oder Wachses,
D) ein bis zur Polymerisation von den polymerisierbaren Bestandteilen des Systems wenigstens in Bezug auf eine Komponente des Redoxsystems getrennt zu haltendes Redoxsystem enthaltend einen Beschleuniger und einen peroxidischen Katalysator oder Initiator in einer Menge ausreichend zur Kalthärtung der Komponente A) und
E) übliche Additive,
enthält und man während des Auftragens der Beschichtungsmasse mittels mindestens einer mobilen Überdruckbelüftungsvorrichtung einen Gasstrom über die zu beschichtende Fläche leitet.

2. Verfahren nach Anspruch 1, **dadurch gekennzeichnet, dass** man ein Reaktionsharz einsetzt, welches mindestens ein Acrylat, mindestens ein Methacrylat und/oder mindestens einen Vinylaromaten als ethylenisch ungesättigte Verbindung A) enthält.

3. Verfahren nach Anspruch 2, **dadurch gekennzeichnet, dass** man ein Reaktionsharz einsetzt, welches Methylmethacrylat, n-Butylacrylat, Butylmethacrylat, Ethylhexylacrylat und/oder Styrol als ethylenisch ungesättigte Verbindung A) enthält.

4. Verfahren nach mindestens einem der vorangehenden Ansprüche, **dadurch gekennzeichnet, dass** man ein Reaktionsharz einsetzt, welches
| A-1) (Meth)acrylat | 10 - 100 Gew.-%, wobei |
|---|---|
| C₁ - C₆ (Meth)acrylat | 0 - 97 Gew.-%, |
| ≥ C₇ (Meth)acrylat | 0 - 50 Gew.-% und |
| mehrwertige (Meth)acrylate | 0,1 - 10 Gew.-% sind, |
und gegebenenfalls
| A-2) Comonomeren | 0 - 90 Gew.-%, wobei |
|---|---|
| Vinylaromaten | 0 - 30 Gew.-% und |
| Vinylester | 0 - 30 Gew.-% sind, |
enthält, wobei die Summe der Komponenten A-1) und A-2) 100 Gew.-% ergibt.

5. Verfahren nach mindestens einem der vorangehenden Ansprüche, **dadurch gekennzeichnet, dass** man ein Reaktionsharz einsetzt, welches die Komponente E) in einer Menge im Bereich von 0 bis 100 Gewichtsteilen auf 10 Gewichtsteile der Komponenten (A + B) enthält.

6. Verfahren nach mindestens einem der vorangehenden Ansprüche, **dadurch gekennzeichnet, dass** man ein Reaktionsharz einsetzt, bei welchem die Komponente B) mindestens ein (Pre)polymer auf Basis von (Meth)acrylaten enthält.

7. Verfahren nach mindestens einem der vorangehenden Ansprüche, **dadurch gekennzeichnet, dass** man ein Reaktionsharz einsetzt, bei welchem der Anteil der Komponente C) 2,5 bis 3,5 Gewichtsteile auf 100 Gewichtsteile der Summe aus (A + B) beträgt.

8. Verfahren nach mindestens einem der vorangehenden Ansprüche, **dadurch gekennzeichnet, dass** man ein Reaktionsharz einsetzt, bei welchem die Komponente D) ein System aus Aminen und Dibenzoylperoxid, insbesondere N,N-Bis(2-Hydroxyethyl)-p-toluidin und Dibenzoylperoxid ist.

9. Verfahren nach mindestens einem der vorangehenden Ansprüche, **dadurch gekennzeichnet, dass** das Aushärten bei einer Temperatur im Bereich von -10°C bis +45°C, vorzugsweise im Bereich von +10°C bis +30 °C, erfolgt.

10. Verfahren nach mindestens einem der vorangehenden Ansprüche, **dadurch gekennzeichnet, dass** man die Beschichtungsmasse in entgegengesetzter Richtung zu der Gasströmungsrichtung aufträgt.

11. Verfahren nach mindestens einem der vorangehenden Ansprüche, **dadurch gekennzeichnet, dass** man die Beschichtungsmasse in einem Gebäude aufträgt.

12. Verfahren nach Anspruch 11, **dadurch gekennzeichnet, dass** man während dem Auftragen der Beschichtungsmasse mittels mindestens einer Überdruckbelüftungsvorrichtung einen Gasstrom über die zu beschichtende Fläche leitet, wobei die mindestens eine Überdruckbelüftungsvorrichtung mit Abstand vor einer Öffnung in einer Wand des Gebäudes angeordnet ist.

13. Verfahren nach Anspruch 11 und/oder 12, **dadurch gekennzeichnet, dass** man den Gasstrom durch mindestens eine Entlüftungseinrichtung aus dem Gebäude leitet, die vorzugsweise in Strömungsrichtung des Gases angeordnet ist

14. Verfahren nach mindestens einem der vorangehenden Ansprüche, **dadurch gekennzeichnet, dass** man einen laminaren Gasstrom über die zu beschichtende Fläche leitet.

15. Verfahren nach mindestens einem der vorangehenden Ansprüche, **dadurch gekennzeichnet, dass** man den durch die mindestens eine Überdruckbelüftungsvorrichtung erzeugten Gasstrom mit mindestens einer von der Überdruckbelüftungsvorrichtung getrennten, beabstandeten und vorzugsweise transportablen Umlenkeinrichtung umlenkt, wobei die Umlenkeinrichtung zwischen der Überdruckbelüftungsvorrichtung und der zu beschichteten Fläche angeordnet ist.

## Claims

1. A method of coating a surface, wherein a coating composition having a viscosity < 100 Pa.s measured at 25 °C is applied to a surface to be coated and allowed to harden, **characterised in that** a coating composition is used which contains a reaction resin comprising
A) one part by weight of at least one ethylenically unsaturated compound,
B) 0-2 parts by weight of a (pre)polymer soluble or swellable in A),
C) 0 to 0.15 parts by weight of at least one paraffin and/or wax,
D) a redox system which is to be kept separate, up to the time of polymerisation, from the polymerisable ingredients of the system, at least with respect to one component of the redox system, this redox system containing an accelerator and a peroxidic catalyst or initiator in an amount sufficient for the cold-hardening of component A), and
E) conventional additives,
and **in that**, during application of the coating composition, a stream of gas is conducted over the surface to be coated with the use of at least one mobile positive-pressure ventilation device.

2. A method according to Claim 1, **characterised in that** a reaction resin is used comprising at least one acrylate, at least one methacrylate and/or at least one vinyl aromatic compound as ethylenically unsaturated compound A).

3. A method according to Claim 2, **characterised in that** a reaction resin is used comprising methyl methacrylate, n-butyl acrylate, butyl methacrylate, ethylhexyl acrylate and/or styrene as ethylenically unsaturated compound A).

4. A method according to at least one of the preceding claims, **characterised in that** a reaction resin is used which comprisies
| A-1) (Meth)acrylate | 10-100 wt.%, of which |
|---|---|
| C₁-C₆ (meth)acrylate | 0 - 97 wt.%, |
| ≥ C7 (meth)acrylate | 0 - 50 wt.%, and |
| plurivalent (meth)acrylates | 0.1 - 10 wt.%, |
and optionally
| A-2) Comonomers | 0 - 90 wt.%, of which |
|---|---|
| vinyl aromatic compounds | 0 - 30 wt.% and |
| vinyl esters | 0 - 30 wt.%, |
wherein the sum of components A-1) and A-2) give 100 wt.%.

5. A method according to at least one of the preceding claims, **characterised in that** reaction resin is used which comprises component E) in a quantity in the region of 0 to 100 parts by weight to 10 parts by weight of components (A+B).

6. A method according to at least one of the preceding claims, **characterised in that** a reaction resin is used in which component B) comprises at least one (pre)polymer based on (meth)acrylates.

7. A method according to at least one of the preceding claims, **characterised in that** a reaction resin is used in which the proportion of component C) is 2.5 to 3.5 parts by weight to 100 parts by weight of the sum of (A+B).

8. A method according to at least one of the preceding claims, **characterised in that** a reaction resin is used in which component D) is a system of amines and dibenzoyl peroxide, in particular N,N-bis(2-hydroxyethyl)-p-toluidine and dibenzoyl peroxide.

9. A method according to at least one of the preceding claims, **characterised in that** the hardening takes place at a temperature in the range from -10 °C to +45 °C, preferably in the range from +10 °C to +30 °C.

10. A method according to at least one of the preceding claims, **characterised in that** the coating composition is applied in the opposite direction to the direction of gas flow.

11. A method according to at least one of the preceding claims, **characterised in that** the coating composition is applied inside a building.

12. A method according to Claim 11, **characterised in that**, during application of the coating composition, a stream of gas is conducted over the area to be coated with the use of at least one positive-pressure ventilation device, the at least one positive-pressure ventilation device being arranged at a distance from an opening in the wall of the building.

13. A method according to Claim 11 and/or 12, **characterised in that** the gas stream is conducted out of the building through at least one venting device, which is preferably arranged in the direction of flow of the gas.

14. A method according to at least one of the preceding claims, **characterised in that** a laminar stream of gas is passed over the surface to be coated.

15. A method according to at least one of the preceding claims, **characterised in that** the stream of gas produced by the at least one positive-pressure ventilation device is deflected with at least one deflecting device which is preferably transportable and is positioned at a distance and separated from the positive-pressure ventilation device, the deflecting device being arranged between the positive- , pressure ventilation device and the surface to be coated.

## Revendications

1. Procédé de revêtement d'une surface, consistant à appliquer et à laisser durcir une masse de revêtement d'une viscosité inférieure à 100 Pa.s, mesurée à 25 °C, sur une surface à revêtir,
**caractérisé en ce qu'**
on utilise une masse de revêtement qui contient une résine .réactive comportant :
A) 1 partie en poids d'au moins un composé éthyléniquement insaturé,
B) 0 - 2 partie(s) en poids d'un (pré)polymère soluble ou gonflant dans A),
C) 0 à 0,15 partie en poids d'au moins une paraffine et/ou une cire,
D) un système rédox à maintenir jusqu'à la polymérisation des constituants polymérisables du système, au moins en ce qui concerne un composant du système rédox, contenant un accélérateur et un catalyseur ou initiateur peroxydique en une quantité suffisante pour le durcissement à froid du composant A) et
E) des additifs usuels,
et on fait circuler au-dessus de la surface à revêtir, pendant l'application de la masse de revêtement, un courant de gaz au moyen d'au moins un dispositif d'aération en surpression mobile.

2. Procédé selon la revendication 1,
**caractérisé en ce qu'**
on utilise une résine réactive qui contient au moins un acrylate, au moins un méthacrylate et /ou au moins un vinyl aromatique, en tant que composé éthyléniquement insaturé A).

3. Procédé selon la revendication 2,
**caractérisé en ce qu'**
on utilise une résine réactive qui contient, comme composé éthyléniquement insaturé A), du méthacrylate de méthyle, de l'acrylate de n-butyle, du méthacrylate de butyle, de l'acrylate d'éthylhexyle et/ou du styrène.

4. Procédé selon au moins l'une des revendications précédentes,
**caractérisé en ce qu'**
on utilise une résine réactive, qui contient les constituants suivants :
| A-1) (méth)acrylate | 10 - 100 % en poids, constitué de : |
|---|---|
| (méth)acrylate en C1-C6 | 0 - 97 % en poids, |
| (méth)acrylate en ≥ C7 | 0 - 50 % en poids et |
| poly(méth)acrylates | 0,1 - 10 % en poids, |
et le cas échéant,
| A-2) comonomères | 0 - 90 % en poids, constitués de : |
|---|---|
| vinyl aromatiques | 0 - 30 % en poids et |
| esters vinyliques | 0 - 30 % en poids, |
la somme des composants A-1) et A-2) représentant 100 % en poids.

5. Procédé selon au moins l'une des revendications précédentes,
**caractérisé en ce qu'**
on utilise une résine réactive, qui contient le composant E) dans une proportion se situant dans la plage de 0 à 100 partie(s) en poids pour 10 parties en poids des composants (A+B).

6. Procédé selon au moins l'une des revendications précédentes,
**caractérisé en ce qu'**
on utilise une résine réactive dans laquelle le composant B) contient au moins un (pré)polymère à base de (méth)acrylates.

7. Procédé selon au moins l'une des revendications précédentes,
**caractérisé en ce qu'**
on utilise une résine réactive dans laquelle la proportion du composant C) représente 2,5 à 3,5 parties en poids pour 100 parties en poids de la somme de (A + B).

8. Procédé selon au moins l'une des revendications précédentes,
**caractérisé en ce qu'**
on utilise une résine réactive dans laquelle le composant D) est un système constitué d'amines et de peroxyde de dibenzoyle, en particulier de N,N-bis(2-hydroxyéthyl)-p-toluidine et de peroxyde de dibenzoyle.

9. Procédé selon au moins l'une des revendications précédentes,
**caractérisé en ce que**
le durcissement a lieu à une température se situant dans une plage de -10 °C à + 45 °C, de préférence dans une plage de + 10 °C à + 30 °C.

10. Procédé selon au moins l'une des revendications précédentes,
**caractérisé en ce qu'**
on applique la masse de revêtement dans la direction opposée à la direction de circulation du gaz.

11. Procédé selon au moins une des revendications précédentes,
**caractérisé en ce qu'**
on applique la masse de revêtement dans un bâtiment.

12. Procédé selon la revendication 11,
**caractérisé en ce qu'**
on fait circuler pendant l'applications de la masse de revêtement, au moyen d'au moins un dispositif d'aération en surpression, un courant de gaz au-dessus de la surface à revêtir, l'au moins un dispositif d'aération en surpression étant disposé à une certaine distance devant une ouverture dans une paroi du bâtiment.

13. Procédé selon la (les) revendication(s) 11 et/ou 12,
**caractérisé en ce qu'**
on évacue le courant de gaz hors du bâtiment au moyen d'au moins un dispositif de dégazage disposé de préférence dans la direction de circulation du gaz.

14. Procédé selon au moins l'une des revendications précédentes,
**caractérisé en ce qu'**
on fait circuler un courant de gaz laminaire au-dessus de la surface à revêtir.

15. Procédé selon au moins l'une des revendications précédentes,
**caractérisé en ce qu'**
on fait changer la direction du courant de gaz produit par l'au moins un dispositif d'aération en surpression avec au moins un dispositif de changement de direction du dispositif d'aération en surpression écarté et de préférence transportable, le dispositif de changement de direction étant disposé entre le dispositif d'aération en surpression et la surface à revêtir.
